# EUROPEAN PATENT APPLICATION

(11) **EP 2 806 287 A1**
(43) Date of publication of application: **26.11.2014**
(21) Application number: 13738490.5
(22) Date of filing: 08.01.2013
(51) Int. Cl.: G01S 13/86, G01S 13/93, G08G 1/16, B60R 21/00

(54) **OBJECT DETECTION DEVICE**

(30) Priority: 16.01.2012 JP 2012006362
(71) Applicant: Toyota Jidosha Kabushiki Kaisha, Toyota-shi, Aichi 471-8571 (JP)
(72) Inventor: INOMATA Ryo, Toyota-shi Aichi 471-8571 (JP)
(74) Representative: TBK
(86) International application number: PCT/JP2013/050106
(87) International publication number: WO 2013/108664

(57) **Abstract**

An object detection device includes: a target information acquisition section that acquires information regarding a radar target detected by a radar and information regarding an image target detected by an image acquisition unit; and an object detection section that detects the presence of an object on the basis of whether or not each of a position of the radar target and a position of the image target are within a predetermined range. The object detection section determines whether or not the object is a pedestrian, and expands the predetermined range when it is determined that the object is a pedestrian from that when it is determined that the object is not a pedestrian.

## Description

### Technical Field

The present invention relates to an object detection device.

### Background Art

As a conventional object detection device, an object detection device that detects an object ahead of a host vehicle by using a radar and a camera is known (for example, refer to Patent Literature 1). It is known that this object detection device scans the area in front of the vehicle using the radar to detect an object, which has a reflection intensity equal to or greater than a threshold value, as a target to be complemented, and reduces the threshold value when the target to be complemented is an object having a low reflection intensity, such as a pedestrian, so that the pedestrian can be easily detected.

### Citation List

### Patent Literature

[Patent Literature 1] Japanese Unexamined Patent Application Publication No. 2006-284293

### Summary of Invention

### Technical Problem

In the conventional object detection device, however, it is not possible to detect a pedestrian sufficiently accurately in some cases. Therefore, there is a demand to further improve the pedestrian detection accuracy so that more accurate warning or collision avoidance can be performed.

The present invention has been made in order to solve such a problem, and an object of the present invention is to provide an object detection device capable of improving the pedestrian detection accuracy.

### Solution to Problem

An object detection device according to an aspect of the present invention includes: a target information acquisition section that acquires information regarding a radar target detected by a radar and information regarding an image target detected by an image acquisition unit; and an object detection section that detects the presence of an object on the basis of whether or not each of a position of the radar target and a position of the image target are within a predetermined range. The object detection section determines whether or not the object is a pedestrian, and expands the predetermined range when it is determined that the object is a pedestrian from that when it is determined that the object is not a pedestrian.

The object detection device detects the presence of an object on the basis of whether or not each of the position of the radar target and the position of the image target is within the predetermined range. When the target object is a pedestrian, since the reflection intensity is weak in detection by the radar, the position of the radar target and the position of the image target become separated from each other. Accordingly, although a pedestrian is actually present, the position of the radar target and the position of the image target do not enter the predetermined range. This may influence the pedestrian detection accuracy. In the object detection device according to the present invention, the object detection section determines whether or not the object is a pedestrian, and expands the predetermined range when it is determined that the object is a pedestrian from that when it is determined that the object is not a pedestrian. Accordingly, when the target object is a pedestrian, the positions of the radar target and the image target can be made to be within the predetermined range even if a horizontal position delay, horizontal jump, and the like of the radar target occur when detecting the pedestrian. As a result, it is possible to accurately detect a pedestrian. Therefore, it is possible to improve the pedestrian detection accuracy.

In the object detection device, the object detection section sets the position of the radar target as a base axis of the predetermined range when it is determined that the object is not a pedestrian, and sets the position of the image target as a base axis of the predetermined range when it is determined that the object is a pedestrian. The image target makes it possible to accurately detect the horizontal position of the pedestrian compared with the radar target causing the horizontal position delay, horizontal jump, or the like when detecting the pedestrian. Accordingly, when it is determined that the object is a pedestrian, the pedestrian can be accurately detected by setting the base axis of the predetermined range for detection to the position of the image target.

In the object detection device, the object detection section determines whether or not the object is a pedestrian on the basis of a moving speed of the radar target. In addition, the object detection section determines whether or not the object is a pedestrian on the basis of a reflection intensity of a radar. Therefore, it is possible to accurately detect whether or not the object is a pedestrian.

In the object detection device, the object detection section determines whether or not the object is a crossing pedestrian moving in a direction crossing a vehicle traveling direction, and changes the predetermined range when it is determined that the object is a crossing pedestrian from that when it is determined that the object is not a crossing pedestrian. When the object is a crossing pedestrian, horizontal position delay of the radar target easily occurs in particular. Therefore, by changing a predetermined range when it is determined that the object is a crossing pedestrian, the effect that the detection accuracy is improved can be more noticeably obtained.

### Advantageous Effects of Invention

According to the present invention, it is possible to improve the pedestrian detection accuracy.

### Brief Description of Drawings

[Fig. 1] Fig. 1 is a diagram showing the configuration of an object detection device according to the present embodiment.
[Fig. 2] Fig. 2 is a schematic diagram showing the relationship among the actual trajectory of a pedestrian with respect to a host vehicle, the trajectory of an image target, and the trajectory of a radar target.
[Fig. 3] Fig. 3 is a schematic diagram showing the relationship between the fusion search range and an image target and a radar target.
[Fig. 4] Fig. 4 is a schematic diagram for comparison between the fusion search ranges before and after change.
[Fig. 5] Fig. 5 is a flow chart showing the details of the process of the object detection device according to the present embodiment.
[Fig. 6] Fig. 6 is a flow chart showing the details of the crossing pedestrian determination process of the object detection device according to the present embodiment.
[Fig. 7] Fig. 7 is a flow chart showing the details of the process according to a modification of the object detection device.

### Description of Embodiments

Hereinafter, an embodiment of an object detection device according to the present invention will be described with reference to the diagrams.

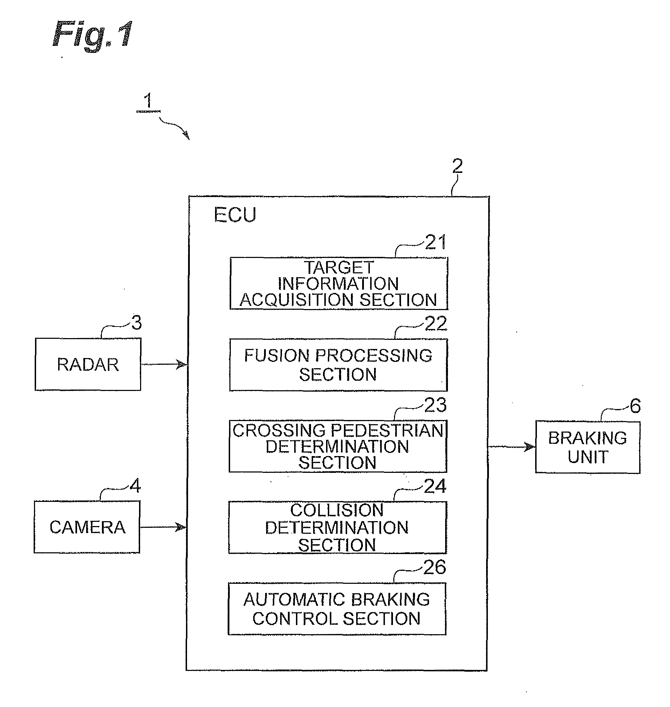

First, the configuration of an object detection device 1 will be described with reference to Fig. 1. Fig. 1 is a diagram showing the configuration of the object detection device 1 according to the embodiment of the present invention.

The object detection device 1 is a device that is mounted in a host vehicle and detects an object present ahead of the host vehicle. The object detection device 1 detects an object in front, and performs driving assistance processing, such as collision avoidance processing or warning processing, using the detection result. The object detection device 1 is configured to include an electronic control unit (ECU) 2, a radar 3, a camera 4, and a braking unit 6. The object detection device 1 can detect an object, which is an obstacle to the host vehicle, by performing sensor fusion that is a combination of a sensor function of the radar 3 and a sensor function of the camera 4. In addition, the object detection device 1 can determine the possibility of collision with a detected object and perform processing for avoiding the collision.

The radar 3 is a radar that detects an object ahead of the host vehicle using a millimeter wave, a laser, or the like. The radar 3 is attached to the front of the vehicle. The radar 3 emits a millimeter wave or a laser forward in front of the host vehicle, and receives a millimeter wave or laser reflected by an object using a receiving unit thereof. The radar 3 is connected to the ECU 2, and outputs information regarding the detected radar target to the ECU 2. The accuracy of the radar 3 in detecting the horizontal position of the object is low. Accordingly, it is not possible to detect the width of the object in principle, but the radar 3 is suitable for detecting the relative speed or distance to the object.

The camera 4 is an image acquisition unit that acquires an image ahead of the host vehicle. The camera 4 is attached to the front of the host vehicle. The camera 4 generates image data by imaging a predetermined range ahead of the host vehicle at a predetermined time interval, and outputs the generated image data to the ECU 2. The accuracy of the camera 4 in detecting the distance to the object and the relative speed is low, but the accuracy of the camera 4 in detecting the horizontal position of the object is high. Accordingly, it is possible to detect the width of the object.

The braking unit 6 applies a braking force to reduce the speed of the host vehicle on the basis of a control signal from the ECU 2. The braking unit 6 has a function of avoiding a collision by reducing the speed of the host vehicle or stopping the host vehicle when there is a possibility of collision between the host vehicle and an object present ahead of the host vehicle. In the present embodiment, in order to avoid a collision with an object, braking control is performed. However, it is also possible to perform control to change the movement path so as to avoid the object, control to avoid a collision by warning the driver with a sound or an image, or control based on a combination thereof.

The ECU 2 is an electronic control unit that controls the entire object detection device 1, and includes a CPU as a main component, a ROM, a RAM, an input signal circuit, an output signal circuit, and a power supply circuit, for example. The ECU 2 is configured to include a target information acquisition section 21, a fusion processing section (object detection section) 22, a crossing pedestrian determination section (object detection section) 23, a collision determination section 24, and an automatic braking control section 26.

The target information acquisition section 21 has a function of acquiring information regarding the radar target detected by the radar 3 and information regarding the image target detected by the camera 4. The information regarding the radar target is various kinds of information acquired by the detection of the radar 3. For example, the information regarding the radar target includes information, such as the position of the radar target (distance to or horizontal position of the radar target), the moving speed of the radar target (relative speed with respect to the host vehicle), and the reflection intensity of the radar 3. The information regarding the image target is various kinds of information acquired from the image of the camera 4. For example, the information regarding the image target includes information, such as the position of the image target (distance to or horizontal position of the image target), the moving speed of the image target (relative speed with respect to the host vehicle), and the horizontal width, depth, or height of the image target. In addition, the target information acquisition section 21 may receive the detection result from the radar 3 or the camera 4 and calculate the information regarding the target described above to acquire the information. Alternatively, the radar 3 or the camera 4 may calculate the information regarding each target, and the target information acquisition section 21 may acquire the information by receiving the information from the radar 3 and the camera 4.

The fusion processing section 22 has a function of detecting an object ahead of the host vehicle by performing sensor fusion by combining the information regarding the radar target and the information regarding the image target. As described above, in the radar 3 and the camera 4, there is information suitable for detection and information that is not suitable for detection. Therefore, it is possible to accurately detect an object by combining both the information suitable for detection and the information that is not suitable for detection. The fusion processing section 22 has a function of setting a fusion search range (predetermined range) and detecting the presence of an object on the basis of whether or not the position of the radar target and the position of the image target are within the fusion search range. In addition, the fusion processing section 22 has a function of expanding the fusion search range when the object is a crossing pedestrian.

### Details of the specific processing will be described later.

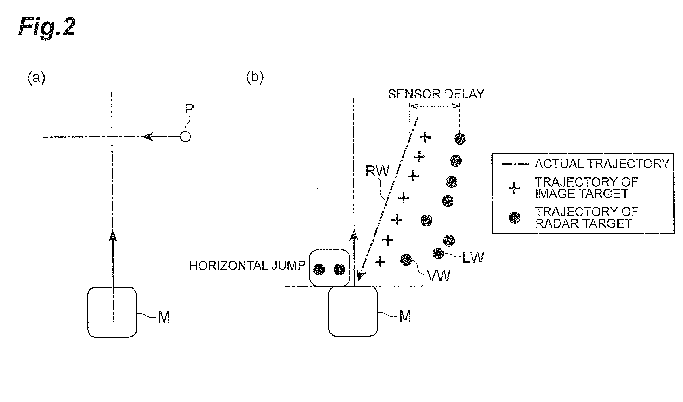

The crossing pedestrian determination section 23 has a function of determining whether or not the detected object is a crossing pedestrian. As an object ahead of the vehicle, a preceding vehicle, a bicycle, a bike, or the like can be mentioned. However, when the object is a crossing pedestrian who moves in a direction crossing the traveling direction of the host vehicle (a direction perpendicular to the traveling direction of the host vehicle or a direction crossing the traveling direction of the host vehicle at an angle close to a right angle), the following problems occur. For example, Fig. 2(a) shows a situation where a crossing pedestrian RW is moving ahead of the host vehicle M. Fig. 2(b) shows an actual trajectory of the crossing pedestrian RW with respect to the host vehicle M, a trajectory of a radar target detected by the radar 3, and a trajectory of an image target detected by the camera 4 in this case. When the detected object is the crossing pedestrian RW, as shown in Fig. 2(b), the horizontal position of the radar target is delayed from the actual horizontal position. In addition, since a reflected wave from the human being is weak, a horizontal jump occurs. Due to these problems, the detection accuracy is reduced. As a result, since sensor fusion cannot be performed and the presence probability of an object is reduced, there is a possibility that appropriate determination cannot be performed. Therefore, by performing appropriate processing on the basis of the determination result of the crossing pedestrian determination section 23, the object detection device 1 can perform accurate determination even if the detected object is a crossing pedestrian.

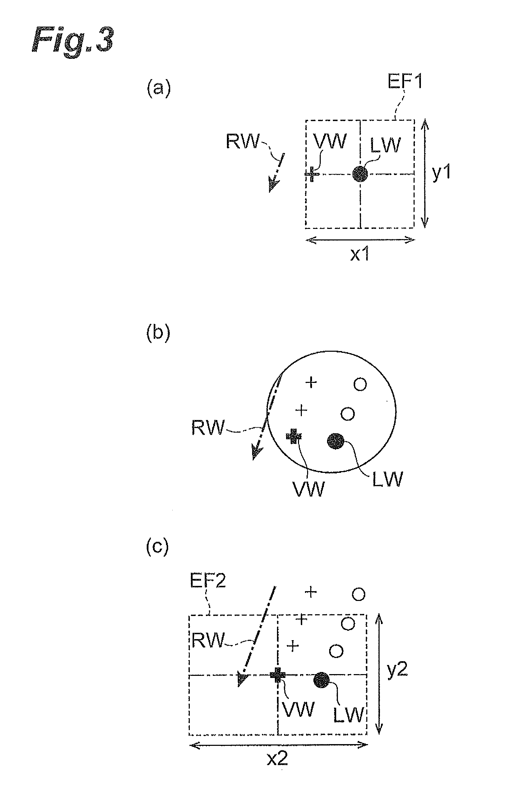

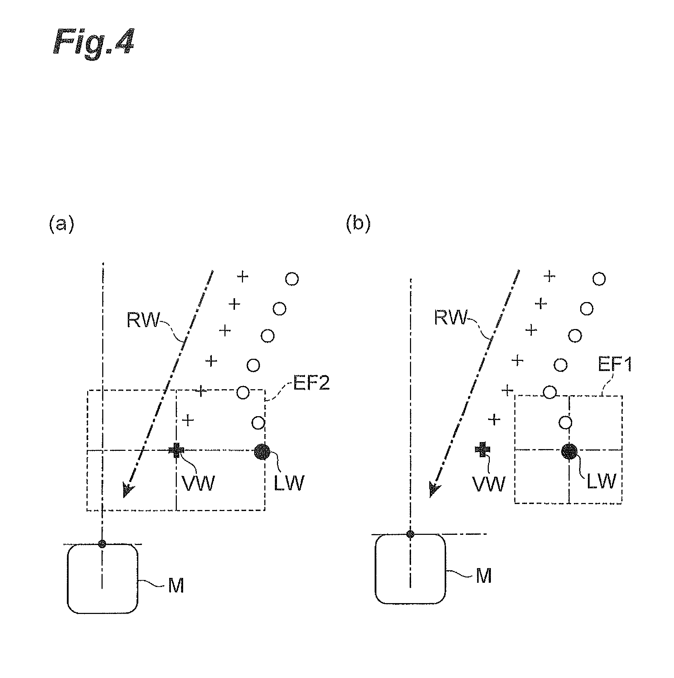

Specifically, as shown in Fig. 3, the fusion processing section 22 detects the presence of an object on the basis of whether or not the position of a radar target LW and the position of an image target VW are within fusion search ranges EF1 and EF2. In the normal state (state where it is not determined that a crossing pedestrian has been detected), the fusion processing section 22 performs sensor fusion, such as combining the image target VW with respect to the radar target LW. That is, the fusion processing section 22 sets the fusion search range EF1 as shown in Fig. 3(a). With the position of the radar target LW as a base axis, the fusion search range EF 1 is set so as to have a horizontal width of x1 and a depth of y1 with respect to the base axis. When the image target VW is located within the fusion search range EF1, the fusion processing section 22 determines that sensor fusion is possible and detects an object. At a timing shown in Fig. 3(b), when the crossing pedestrian determination section 23 determines that the detected object is the crossing pedestrian RW, the fusion processing section 22 changes the fusion search range from that when it is determined that the detected object is not the crossing pedestrian RW. When it is determined that the detected object is the crossing pedestrian RW, the fusion processing section 22 combines the radar target LW with respect to the image target VW, and performs sensor fusion by further increasing the size of the fusion search range itself. That is, the fusion processing section 22 changes the fusion search range from the fusion search range EF1 in the normal state to the fusion search range EF2 for crossing pedestrians shown in Fig. 3(c). With the position of the image target VW as a base axis, the fusion search range EF2 is set so as to have a horizontal width of x2(> x1) and a depth of y2 (> y1) with respect to the base axis. When the image target LW is located within the fusion search range EF2, the fusion processing section 22 determines that sensor fusion is possible and detects an object. For example, if the fusion search range EF1 is used when detecting a crossing pedestrian in the same manner as when detecting other objects, the image target VW does not enter the fusion search range EF1 having the position of the radar target LW as a base axis due to the influence of sensor delay, as shown in Fig. 4(b). Accordingly, sensor fusion may not be able to be performed even though the crossing pedestrian RW is actually present. In contrast, when the fusion search range EF2 that has been expanded with the position of the image target VW as a base axis is used, sensor fusion is possible even if there is a sensor delay or the like, as shown in Fig. 4(a). Accordingly, it is possible to accurately detect the crossing pedestrian RW.

The collision determination section 24 has a function of performing determination regarding whether or not there is a possibility of collision between the detected object and the host vehicle. The collision determination section 24 performs sensor fusion between the information regarding the radar target and the information regarding the image target, and increases the presence probability of an object if the sensor fusion is possible. For example, when both the position of the radar target LW and the position of the image target VW are within the fusion search range as shown in Fig. 4(a), the collision determination section 24 increases the presence probability of an object. When any of the position of the radar target LW and the position of the image target VW is outside the fusion search range as shown in Fig. 4(b), the collision determination section 24 reduces the presence probability of an object. The collision determination section 24 further increases the presence probability of an object in proportion to the time of sensor fusion, and calculates a collision time (= relative distance/relative speed) between the object and the host vehicle when the presence probability exceeds a predetermined threshold value. When the collision time is equal to or less than the predetermined threshold value, the collision determination section 24 determines that the possibility of collision between the object and the host vehicle is high.

The automatic braking control section 26 has a function of outputting a control signal for automatic braking to the braking unit 6 when the collision determination section 24 determines that the possibility of collision is high.

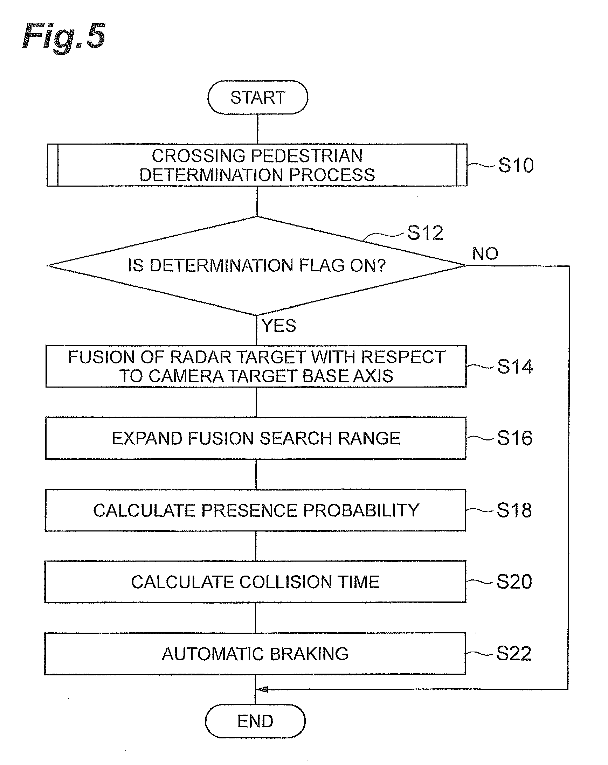

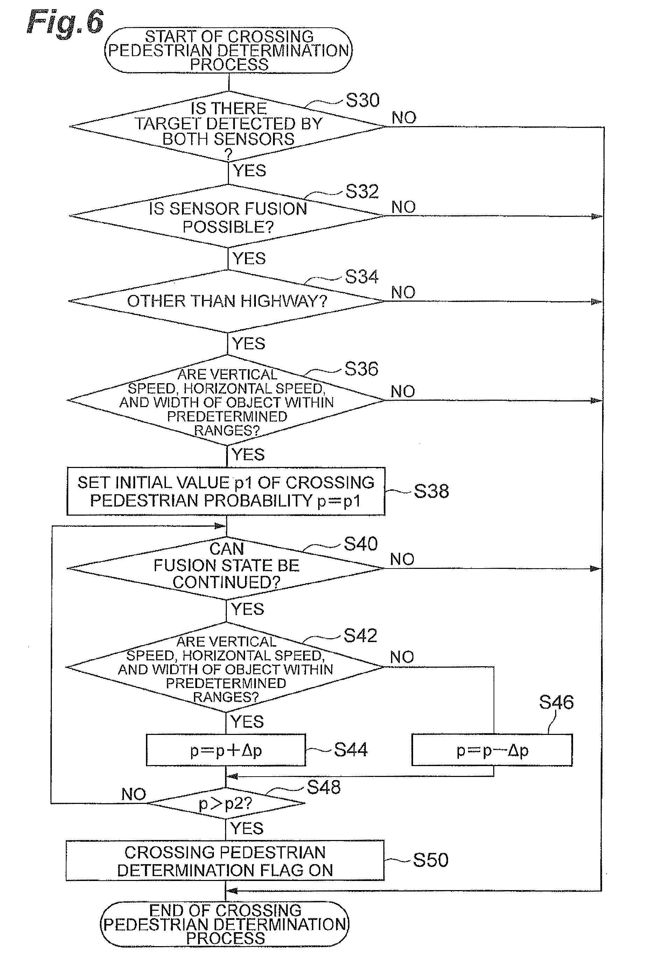

Next, an example of the process of the object detection device 1 according to the present embodiment will be described with reference to Figs. 5 and 6. The processes shown in Figs. 5 and 6 are performed by the ECU 2 while a vehicle in which the object detection device 1 is mounted is traveling. First, as shown in Fig. 5, the crossing pedestrian determination section 23 performs a crossing pedestrian determination process for determining whether or not an object ahead of the vehicle is a crossing pedestrian (step S10).

In the crossing pedestrian determination process, a process shown in Fig. 6 is performed by the crossing pedestrian determination section 23. In the crossing pedestrian determination process, as shown in Fig. 6, the crossing pedestrian determination section 23 determines whether or not there is a target detected by both sensors of the radar 3 and the camera 4 by referring to the information acquired by the target information acquisition section 21 (step S30). When it is determined that there is no target detected by both the sensors in S30, the crossing pedestrian determination process shown in Fig. 6 ends in a state where the crossing pedestrian determination flag is OFF. On the other hand, when it is determined that there is a target detected by both the sensors in S30, the crossing pedestrian determination section 23 determines whether or not sensor fusion is possible with reference to the processing result of the fusion processing section 22 (step S32). For example, as shown in Fig. 3(a), when the position of the image target VW is within the fusion search range EF1, the crossing pedestrian determination section 23 determines that sensor fusion is possible. When the position of the image target VW is outside the fusion search range EF1, the crossing pedestrian determination section 23 determines that sensor fusion is not possible, and ends the crossing pedestrian determination process shown in Fig. 6 in a state where the crossing pedestrian determination flag is OFF.

On the other hand, when it is determined that sensor fusion is possible in S32, the crossing pedestrian determination section 23 determines whether or not a target object is present outside a highway (step S34). This determination can be performed on the basis of an image acquired by the camera 4, for example. When it is determined that an object is present in the highway in S34, the crossing pedestrian determination process shown in Fig. 6 ends in a state where the crossing pedestrian determination flag is OFF. On the other hand, when it is determined that an object is present outside the highway in S34, the crossing pedestrian determination section 23 determines whether or not the vertical speed, horizontal speed, and width of the object are within predetermined ranges on the basis of the information acquired by the target information acquisition section 21 (step S36). For example, when the moving speed is too fast as a crossing pedestrian, or when the object is completely stopped, or when the width is too large, it can be determined that the object is not a crossing pedestrian. In addition, the determination may be performed taking the reflection intensity of the radar 3 into consideration. When it is determined that each condition is not within the predetermined range in S36, the crossing pedestrian determination process shown in Fig. 6 ends in a state where the crossing pedestrian determination flag is OFF.

On the other hand, when it is determined that each condition is within the predetermined range in S36, the crossing pedestrian determination section 23 calculates a crossing pedestrian probability in order to determine the reliability of the object being a crossing pedestrian. Specifically, the crossing pedestrian determination section 23 sets an initial value p1 as a crossing pedestrian probability p (step S38). Then, the crossing pedestrian determination section 23 determines whether or not the fusion state can be continued by referring to the processing of the fusion processing section 22 again (step S40). When it is determined that the fusion state cannot be continued in S40, the crossing pedestrian determination process shown in Fig. 6 ends in a state where the crossing pedestrian determination flag is OFF. On the other hand, when it is determined that the fusion state can be continued in S40, the crossing pedestrian determination section 23 determines whether or not the vertical speed, horizontal speed, and width of the object are within predetermined ranges on the basis of the information acquired by the target information acquisition section 21 (step S42). When it is determined that each condition is within the predetermined range in S42, the crossing pedestrian determination section 23 increases the crossing pedestrian probability p by adding Δp to the crossing pedestrian probability p (step S44). When it is determined that each condition is not within the predetermined range, the crossing pedestrian determination section 23 reduces the crossing pedestrian probability p by subtracting Δp from the crossing pedestrian probability p (step S46). Then, the crossing pedestrian determination section 23 determines whether or not the crossing pedestrian probability p is larger than a predetermined threshold value p2 (step S48). When the crossing pedestrian probability p is equal to or less than the threshold value p2, the process is repeated again from S40. On the other hand, when the crossing pedestrian probability p is larger than the threshold value p2, the crossing pedestrian determination section 23 sets the crossing pedestrian determination flag to ON and ends the crossing pedestrian process shown in Fig. 6.

Returning to Fig. 5, the fusion processing section 22 determines whether or not the determination flag for crossing pedestrian determination is ON (step S12). When the detected object is not a crossing pedestrian (for example, when the detected object is a preceding vehicle) or when no object is detected by the radar 3 or the camera 4 from the beginning, the determination flag is set to OFF in S10. In this case, it is determined that the determination flag is not ON in S12, and the process shown in Fig. 5 ends. In this case, when no object is detected, the traveling of the host vehicle continues. In addition, when an object other than a crossing pedestrian is detected, the presence probability and the collision time are calculated using the fusion search range EF1 having the position of the radar target LW as a base axis as shown in Fig. 3 (a), and automatic braking is performed when there is a possibility of collision

On the other hand, when it is determined that the determination flag is ON in S12, the fusion processing section 22 performs the fusion of the image target and the radar target (step S 14), and expands the fusion search range (step S16). Specifically, the fusion processing section 22 changes the fusion search range from the fusion search range EF1 shown in Fig. 3(a) to the fusion search range EF2 shown in Fig. 3(c). Then, the collision determination section 24 calculates a presence probability on the basis of the changed fusion search range EF2 (step S18). That is, the collision determination section 24 increases the presence probability of an object (crossing pedestrian) if the radar target LW is present in the fusion search range EF2 having the position of the image target VW as a base axis, and reduces the presence probability if the radar target LW is located outside the fusion search range EF2. When this calculation is repeated and the presence probability becomes larger than a predetermined threshold value, the collision determination section 24 calculates a collision time until the host vehicle collides with the object (step S20). When this collision time becomes equal to or less than the predetermined threshold value, the automatic braking control section 26 outputs a control signal to the braking unit 6 to perform braking processing for avoiding a collision with the object (step S22). When the processing of S22 ends, the process shown in Fig. 5 ends, and the process is repeated again from S10.

Next, the operations and effects of the object detection device 1 according to the present embodiment will be described.

First, as shown in Fig. 4(b), a case will be described in which the fusion search range EF1 having the position of the radar target LW as a base axis is used regardless of whether or not a target object is a pedestrian. As described above, when the target object is a pedestrian, in the detection using the radar 3, a horizontal position delay may occur or a horizontal jump may occur since the reflection intensity is weak (refer to Fig. 2(b)). In this case, as shown in Fig. 4(b), the position of the radar target LW is separated from the position of the image target VW. Accordingly, although the crossing pedestrian RW is actually present, the position of the radar target LW and the position of the image target VW do not enter the fusion search range EF1. For this reason, the calculation is performed so as to reduce the presence probability, and this influences the detection accuracy of the crossing pedestrian RW.

On the other hand, in the object detection device 1 according to the present embodiment, the crossing pedestrian determination section 23 determines whether or not the object is the crossing pedestrian RW. In addition, when it is determined that the object is the crossing pedestrian RW, the fusion processing section 22 changes the fusion search range from the fusion search range EF1 when it is determined that the object is not the crossing pedestrian RW to the fusion search range EF2, as shown in Fig. 4(a). Accordingly, when the target object is the crossing pedestrian RW, the fusion search range for object detection can be changed to a range suitable for detecting the crossing pedestrian RW. Therefore, it is possible to improve the crossing pedestrian detection accuracy.

In the object detection device 1, the fusion processing section 22 uses the fusion search range EF1 having the position of the radar target LW as the base axis when it is determined that the object is not the crossing pedestrian RW, and uses the fusion search range EF2 having the position of the image target VW as the base axis when it is determined that the object is the crossing pedestrian RW. The image target VW makes it possible to accurately detect the horizontal position of the crossing pedestrian RW, compared with the radar target LW causing the horizontal position delay, horizontal jump, or the like when detecting the crossing pedestrian RW. Accordingly, when it is determined that the object is the crossing pedestrian RW, the crossing pedestrian RW can be accurately detected by setting the base axis of the fusion search range EF2 for detection to the position of the image target VW.

In the object detection device 1, when it is determined that the object is the crossing pedestrian RW, the fusion processing section 22 uses the fusion search range EF2 that is larger than the fusion search range EF1 when it is determined that the object is not the crossing pedestrian RW. By expanding the fusion search range EF2, even if the horizontal position delay, horizontal jump, and the like of the radar target LW occur when detecting the crossing pedestrian RW, the positions of the radar target LW and the image target VW can be made to be within the fusion search range EF2. As a result, it is possible to accurately detect a pedestrian.

In the object detection device 1, the crossing pedestrian determination section 23 determines whether or not the object is the crossing pedestrian RW on the basis of the moving speed of the radar target LW. In addition, the crossing pedestrian determination section 23 may determine whether or not the object is the crossing pedestrian RW on the basis of the reflection intensity of the radar 3. In this manner, it is possible to accurately detect that the object is a crossing pedestrian.

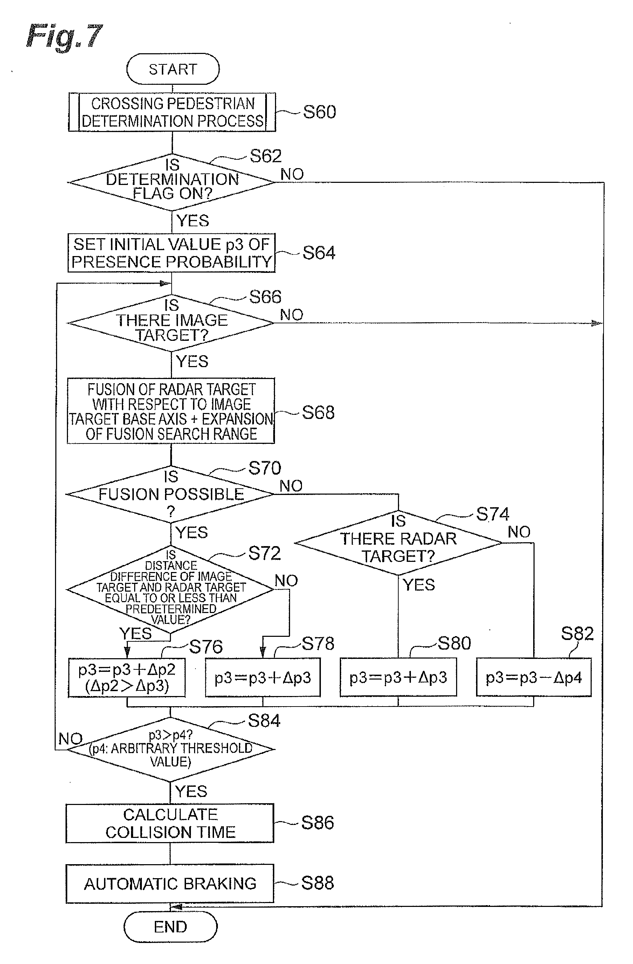

The present invention is not limited to the embodiment described above. For example, a process shown in Fig. 7 may be performed. In the process shown in Fig. 7, when the detected object is a crossing pedestrian, sensor fusion to combine the radar target with respect to the image target is performed instead of combining the image target with respect to the radar target, and the amount of addition or subtraction of the presence probability when the radar target is lost or when the distance between the image target and the radar target is increased is changed. When the detection by the camera 4 can be continued, the collision time is calculated.

Specifically, as shown in Fig. 7, the crossing pedestrian determination section 23 performs a crossing pedestrian determination process (step S60). Then, the fusion processing section 22 determines whether or not the determination flag is ON (step S62). In S60 and S62, the same processing as in S10 and S12 of Fig. 5 is performed. Then, the collision determination section 24 sets the initial value p3 of the presence probability (step S64). Then, the fusion processing section 22 determines whether or not there is an image target (step S66). When it is determined that there is no image target in S66, it is determined that the detection by the camera 4 cannot be continued, and the process shown in Fig. 7 ends. On the other hand, when it is determined that there is an image target in S66, the fusion processing section 22 performs sensor fusion to combine the radar target with respect to the image target and expands the fusion search range (step S68). This is a process of changing the fusion search range, which has the position of the radar target as the base axis in a normal state, to the fusion search range having the position of the image target as the base axis and expanding the fusion search range itself.

Then, the collision determination section 24 performs an operation of adjusting the presence probability on the basis of each condition. Specifically, the collision determination section 24 determines whether or not the fusion of the image target and the radar target is possible (step S70). When it is determined that the fusion is not possible in S70, the collision determination section 24 determines whether or not there is a radar target (step S74). On the other hand, when it is determined that the fusion is possible in S70, the collision determination section 24 determines whether or not a distance difference between the image target and the radar target is equal to or less than a predetermined value (step S72). When it is determined that the fusion is possible and the distance difference between the image target and the radar target is equal to or less than the predetermined value by the determination of each condition, the collision determination section 24 determines that the possibility of the presence of a crossing pedestrian is high, and adds Δp2 to the presence probability (step S76). In addition, when it is determined that the fusion is possible but the distance difference is larger than the predetermined value, the collision determination section 24 adds an addition amount Δp3, which is smaller than the addition amount Δp2 in S76, to the presence probability (step S78). On the other hand, when it is determined that the fusion is not possible but there is a radar target, the collision determination section 24 adds Δp3 to the presence probability (step S80). In addition, when it is determined that the fusion is not possible and a radar target is lost, the collision determination section 24 subtracts Δp4 from the presence probability (step S82).

After the processing of any of S76 to S82, the collision determination section 24 determines whether or not the presence probability has become larger than a predetermined threshold value p4 (step S84). When it is determined that the presence probability is equal to or less than the threshold value p4, the process is repeated again from S66. As described above, while the detection by the camera 4 can be continued, the presence probability can be calculated on the basis of the amount of addition or subtraction according to the situation. When it is determined that the presence probability is larger than the threshold value p4 in S84, the collision determination section 24 calculates a collision time until the host vehicle collides with the object (step S86). When this collision time becomes equal to or less than the predetermined threshold value, the automatic braking control section 26 outputs a control signal to the braking unit 6 to perform braking processing for avoiding a collision with the object (step S88). When the processing of S88 ends, the process shown in Fig. 7 ends, and the process is repeated again from S60.

According to the process shown in Fig. 7, since sensor fusion is performed by expanding the fusion search range while setting the position of the image target with high horizontal position detection accuracy as the base axis, it is possible to improve the crossing pedestrian detection accuracy. Moreover, in consideration of the characteristics of the radar 3, the calculation of the presence probability is continued as long as the detection by the camera 4 can be continued, and the amount of addition or subtraction according to the situation is set and calculated without reducing the presence probability abruptly even if the radar target is lost or the distance from the image target increases. In this case, it is possible to perform accurate detection even for a crossing pedestrian.

In the embodiment described above, a process of expanding the fusion search range is performed particularly when a crossing pedestrian moving in a direction crossing the vehicle traveling direction is determined to be an object for which a horizontal position delay of a radar target easily occurs. Thus, by setting the crossing pedestrian as a target, the effect that the pedestrian detection accuracy is improved can be more noticeably obtained. Without being limited to the crossing pedestrian, if it is determined that the object is a pedestrian regardless of a walking direction, a process of expanding the fusion search range may be performed.

### Industrial Applicability

The present invention is applicable to an object detection device.

### Reference Signs List

1: object detection device
3: radar
4: camera (image acquisition unit)
2: ECU
21: target information acquisition section
22: fusion processing section (object detection section)
23: crossing pedestrian determination section (object detection section)

## Claims

1. An object detection device, comprising:
a target information acquisition section that acquires information regarding a radar target detected by a radar and information regarding an image target detected by an image acquisition unit; and
an object detection section that detects presence of an object on the basis of whether or not each of a position of the radar target and a position of the image target are within a predetermined range,
wherein the object detection section determines whether or not the object is a pedestrian, and expands the predetermined range when it is determined that the object is a pedestrian from that when it is determined that the object is not a pedestrian.

2. The object detection device according to claim 1,
wherein the object detection section sets the position of the radar target as a base axis of the predetermined range when it is determined that the object is not a pedestrian, and sets the position of the image target as a base axis of the predetermined range when it is determined that the object is a pedestrian.

3. The object detection device according to claim 1 or 2,
wherein the object detection section determines whether or not the object is a pedestrian on the basis of a moving speed of the radar target.

4. The object detection device according to any one of claims 1 to 3,
wherein the object detection section determines whether or not the object is a pedestrian on the basis of a reflection intensity of a radar.

5. The object detection device according to any one of claims 1 to 4,
wherein the object detection section determines whether or not the object is a crossing pedestrian moving in a direction crossing a vehicle traveling direction, and expands the predetermined range when it is determined that the object is a crossing pedestrian from that when it is determined that the object is not a crossing pedestrian.
